# EUROPEAN PATENT SPECIFICATION

(11) **EP 1 386 446 B1**
(45) Date of publication and mention of the grant of the patent: **20.09.2006**
(21) Application number: 02718379.7
(22) Date of filing: 25.04.2002
(51) Int. Cl.: H04L 12/00, H04L 12/24, H04L 12/56

(54) **Method and device for telecommunication network management**
Verfahren und Vorrichtung zur Verwaltung eines Telekommunikationsnetzwerkes
Procédé et dispositif de gestion d'un réseau de télécommunication

(30) Priority: 26.04.2001 GB 0110270
(43) Date of publication of application: 04.02.2004
(73) Proprietor: Ericsson AB, 164 83 Stockholm (SE)
(72) Inventor: HUNNEYBALL, Timothy, John, Nittingham NG4 3LZ (GB)
(74) Representative: Stasiewski, Piotr Grzegorz
(86) International application number: PCT/GB2002/001877
(87) International publication number: WO 2002/089401

(56) References cited:
- EP-A- 0 869 435
- EP-A- 1 065 848
- GHANI N: "LAMBDA-LABELING: A FRAMEWORK FOR IP-OVER-WDM USING MPLS" OPTICAL NETWORKS MAGAZINE, SPIE, BELLINGHAM, WA, US, vol. 1, no. 2, April 2000 (2000-04), pages 45-58, XP000969815 ISSN: 1388-6916
- AWDUCHE D ET AL: "MULTIPROTOCOL LAMBDA SWITCHING: COMBINING MPLS TRAFFIC ENGINEERING CONTROL WITH OPTICAL CROSSCONNECTS" IEEE COMMUNICATIONS MAGAZINE, IEEE SERVICE CENTER. PISCATAWAY, N.J, US, vol. 39, no. 3, March 2001 (2001-03), pages 111-116, XP001059336 ISSN: 0163-6804
- AWDUCHE D. ET AL: 'Requirements for Traffic Engineering Over MPLS' IETF REQUEST FOR COMMENTS 2702 September 1999, pages 1 - 29, XP002185031

## Description

The present invention relates to improvements in and relating to telecommunications networks, and in particular to a data communications network, to a method of communicating across a data communications network and to a network element of such a network.In current optical networks, for example SONET/SDH/WDM networks, centralised control is commonly used for configuration and monitoring of the equipment. Connection oriented networks, which are centrally controlled, commonly suffer from problems relating to delays in the provisioning of circuits for the transmission of data. In order to reduce such delays, it has been proposed to implement a distributed control of such optical networks, for example by using a GMPLS protocol (generalised multi-protocol label switching). In a network operated under a GMPLS environment, the GMPLS protocols effectively enable connection requests for new circuits to be handled by the network itself and for the network to set-up the requested circuit, as opposed to a separate central management system setting up the connection.

Proposals have also been made for the conversion of existing optical network systems operating in a centrally managed environment and supporting OSI routing protocols into networks supporting distributed routing protocols. It has for example been proposed to provide a SONET network that supports IP-based routing protocols by running IP protocols over the existing embedded data communications channels (DCCs) of the SONET network. Such a proposal is outlined in the Network and Services Integration Forum (NSIF) document entitled "SIF Contribution NSIF-AR-9910-111 Alternatives for IP on SONET DCC" dated 10^{th} October 1999 by Jeff Learman of Open Networks Engineering, Inc.

By way of brief explanation, centralised control in existing networks generally makes use of embedded communications channels (data communications channels or DCCs) which are contained in "overhead" areas (as opposed to the "payload" area) of the data signal. For example, in SONET/SDH networks the overhead area is in a part of the frame, and in WDM networks the DCCs may be transmitted over a spare wavelength. The embedded channels (DCCs) form a data communications network (DCN) which may be accessed at a network equipment node, referred to as a gateway network element, by a standard data communications technology interface (for example, an Ethernet interface).

The NSIF proposal suffers from several disadvantages. The DCCs of an existing SONET network do not necessarily have the same topology as the flow of client data. Thus, if IP routing protocol signals were transmitted over the existing network of DCCs the existence of a fault affecting the transmission of client data might not affect the transmission of the IP routing protocol signals and detection of the fault may thereby be delayed. Also, IP information does not need to be passed through network elements not involved in routing decisions; using the existing DCCs might cause IP information to be passed through and/or processed by such network elements unnecessarily.

EP-A-1 065 848 to Alcatel describes a communications network in which an IP packet is encapsulated for transmission over an OSI communications link.

It is therefore an object of the present invention to provide a data communications network and a method of communicating across such a network which allows a centrally managed network to support a distributively managed protocol whilst mitigating one or more of the disadvantages of the prior art mentioned above. According to a first aspect of the present invention there is provided a data communications network comprising a plurality of interconnected network elements (2) forming at least part of a first data communications network (5)wherein the first data communications network comprises a central management terminal (1), for central management of the first network and centrally managed control channels (5,5A) for communication across the first network of control information relating to the control of the first network, wherein the centrally managed control channels of the first data communications network extend to the central management terminal (1), wherein the plurality of interconnected network elements form at least a part of a second data communications network (6), wherein the second data communications network comprises a distributive management system and distributively managed control channels (6, 6a-6d) for communication across the second data communications network of control information relating to the control of the second network wherein the distributively managed control channels of the second network do not extend to the central management terminal (1) and wherein the data communications network is able to handle both
(i) a central management protocol by means of the first network and its control channels and
(ii) a distributed control protocol by means of the second network and its control channels,
Characterised in that
the network elements comprise a first protocol stack (18a-18e) for controlling communication according to the central management protocol and a second protocol stack (17a-17e) for controlling communication according to the distributed control protocol, whereby the first and second protocol stacks diverge on levels higher than the data link layer (17b, 18b).

Preferably the data-link layer interface comprises point-to-point and link-access-procedure-D-channel protocol.

Preferably an interconnection is provided between two of the network elements in which the interconnection is operable to support both the centrally managed protocol and the distributively managed protocol.

Preferably the interconnection is operable to carry one of the centrally managed control channels of the first network and one of the distributively managed control channels of the second network.

The invention is thus able to provide a network in which both central management and distributed management protocols are supported and in which the topology of the control channels of the distributively managed network (the second network) corresponds to the topology of the data traffic thereby enabling efficient detection of circuit breaks in the network. The network may be configured such that it can be considered as comprising two quasi-parallel data communications networks (DCNs), one DCN for central management and one DCN for distributed management, the two DCNs sharing at least some of the same physical media (for example, the network elements and the fibre links therebetween). Like the NSIF proposal mentioned above, the present invention allows central management of the network, but unlike the NSIF proposal the present invention further facilitates the use of distributed management and associated protocols over the network independently of a central management system.

Furthermore the invention allows the introduction of networks that support distributed management protocols, but which also support central management so that a migration can gradually be made from an existing centrally managed network to a distributively managed network.

The topology of at least one of the networks of control channels is advantageously manually configurable (for example at the data link layer). For example, the topology of the centrally managed control channels of the first network may conveniently be manually configurable from the central management system. The topology of the distributively managed control channels of the second network may for example conveniently be manually configurable by means of external equipment. The manual configuration of the topology of the distributively managed control channels of the second network may be performed when commissioning a new network element, for example by using local commissioning equipment. For example, the local commissioning equipment could be in the form of a craft terminal or a dumb terminal, via a command line interface (CLI). The commissioning performed by such external commissioning equipment may be considered as being similar to the commissioning functions able to be performed by the central management system of the first network. The topology of the distributively managed control channels of the second network may alternatively, or additionally, be manually configurable by means of instructions sent from the central management system over the centrally managed control channels of the first network to the relevant network elements (common to both the first and second networks).

The control channels of each network may for example facilitate the transmission of routing information associated with the transmission of data, and may also, for example, facilitate the transmission of circuit provisioning information.

Each network may of course support many different protocols or different aspects of a given protocol or suite of protocols.

The plurality of network elements preferably comprises at least one multiplexer. The plurality of network elements preferably comprises at least one gateway network element. The first network preferably includes a central management system, which effects the central management of the first network. In such a case, the topology of the control channels of the first and second networks is advantageously different in the region of the central management system. For example, the network may be so arranged that the centrally managed control channels of the first network extend to the central management system, whereas the distributively managed control channels of the second network do not extend to the central management system. The network may be so arranged that the distributively managed control channels of the second network are actively blocked at the interface with the central management system. The central management system may be connected to a network element of the first network by means of an Ethernet interface.

The network advantageously includes a connection leading from one of the network elements of the second network, the connection being suitable for connecting a data device to the second network. In such a case, the topology of the control channels of the first and second networks are advantageously different in the region of the connection to the data device. For example, the network is preferably so arranged that the distributively managed control channels of the second network extend to said connection, whereas the centrally managed control channels of the first network do not extend to said connection. Not allowing control information concerning the centrally managed network outside of the network, for example by blocking the relevant control channels at the interface to the data device, may reduce security risks associated with the possibility of a third party interfering with the operation of and/or misusing the first network. For example, the data communications network may be privately owned and the data device may be owned by a third party (a customer), the data device being linked to the data communications network for the purposes of using the network.

Advantageously, the network includes a data device connected to the second network by a connection leading from one of the network elements of the second network. It should be noted that it is possible for such a data device to be in a different country from the rest of the network.

The data device may be a network switch, a network router, or other piece of network equipment. The data communications network may of course be connected to other data devices not under the same management as either of the first and second networks. Such data devices may form part of a different network. The data communications network may be linked to a further data communications network. A single central management system may be provided to manage the first network and at least one further network. Such a single central management system may manage five or more networks, for example SONET/SDH rings.

The invention has particular application where the first network comprises optical network elements, such as for example photonic/WDM (Wavelength Division Multiplexing), SONET (Synchronous Optical Network) or SDH (Synchronous Digital Hierarchy) network elements.

The first network may be a converted legacy network. The term converted legacy network may be defined as including any network that was originally installed using technology not fully compatible with contemporary technology, and then later converted, if necessary, for use in relation to the present invention. For example legacy networks may not be compatible with MPLS protocols as required by certain preferred aspects of the present invention. Most of the networks installed in or before the mid-1990s may, for example, be considered as being legacy networks.

The network elements of the first network are preferably able to handle an OSI protocol, for example an OSI routing protocol. The network elements of the first network are preferably able to handle a complete suite of OSI (Open Systems Interconnection) protocols.

The network elements of the second network are preferably able to handle an IP protocol, for example an IP routing protocol. The network elements of the second network are preferably able to handle a complete suite of IP (IP = Internet Protocol) protocols. The network elements of the second network are preferably able to handle the protocols associated with MPLS (Multi-Protocol Label Switching), for example a generalised (or generic) form of MPLS (such as GMPLS). Preferably, the network elements of the second network are able to handle the transmission of data in the form of MPLS encapsulated IP encoded data packets.

The data communications network of the present invention is advantageously able to handle transmission of data both by means of OSI protocols and by means of MPLS protocols.

Advantageously, each of the plurality ot network elements are configured to be able to extract from signals received at the network element an indication of whether the signals received are to be processed in accordance with a protocol suitable for use with the first network or whether the signals received are to be processed in accordance with a protocol suitable for use with the second network. For example, the network may be so arranged that data transmitted by means of a given protocol contains an indication that the data is being transmitted under that protocol. The indication may indicate the type of protocol (for example, whether the protocol is an OSI protocol or an IP protocol). The indication of the protocol or the type of protocol is preferably by means of a protocol identification field or by the use of (data link) addressing information.

The control channels of the first and second networks are conveniently in the form of embedded control channels. The control channels may be embedded in the overhead part of the data transmitted (i.e. outside the payload area, which contains the "client data").

As mentioned above, in the context of the case where the first network includes a central management system, the distributively managed control channels may be prevented from extending to the central management system. There may be other situations in which it would be useful to prevent or discourage the topology of the control channels of one of the first and second networks from following the topology of the control channels of the other.

For example, the first network may comprise one or more network elements not involved in routing decisions, for example, signal regenerators. It is not necessary therefore for the distributively managed control channels of the second network to be able to be accessed by such non-routing network elements. In such a case, the network is preferably so arranged that the centrally managed control channels of the first network effectively extend to such (non-routing) network elements, but the distributively managed control channels of the second network do not. Again, this represents a scenario where the topologies of the first and second control networks are advantageously different. The network may be arranged such that the distributively managed control channels of the second network are effectively actively blocked at the interface with such non-routing network elements.

Another example of a scenario where it may be advantageous for the topologies of the first and second networks to be different is where the second network is heavily meshed with extra links between network elements (for more efficient transmission of data or for the purposes of improving performance of the network in the event of a circuit break in the network). Such meshing might overload the control channels of the centrally managed network (of the first network) and therefore it might be advantageous to avoid sending control information relating to the centrally managed network over such links.

Advantageously, the network includes a link between network elements common to the first and second networks, the link being so arranged that the distributively managed control channels of the second network extend to said link, whereas the centrally managed control channels of the first network do not extend to said link. The link may be one of many links meshing the second network. The centrally managed control channels of the first network may be actively blocked to prevent them from running over the link or links forming the mesh.

Preferably, the networks are configurable such that a given protocol can be disabled, or blocked, at any given interface.

Preferably, the operation of the network is such that it may be represented by two communication stacks, one stack for the Central Management communications (for example, OSI) and the other stack for the distributed management communications (for example, TCP/IP). A combined dual-stack solution is described in further detail below with reference to an embodiment of the invention.

According to a second aspect of the invention there is provided a method of communicating across a data communications network, the network comprising a plurality of interconnected network elements (2a-2d) forming at least part of a first data communications network (5,5a), and the plurality of interconnected network elements forming at least a part of a second data communications network (6,6a-6d), the method including the steps of:
(a) centrally managing the first network by means of transmitting control information over centrally managed control channels of the first network, wherein the first network includes a central management terminal, and the step of transmitting control information over the centrally managed control channels is performed by the central management terminal,
(b) distributively managing the second network by means of transmitting control information over distributively managed control channels of the second network, in which the topology of the centrally managed control channels of the first network is different from the topology of the distributively managed control channels of the second network,
(c) transmitting data across the first network by means of a central management protocol (18) and,
(d) transmitting data across the second network by means of a distributed control protocol (17),
Characterised in that
the network elements comprise a first protocol stack (18a-18b)for controlling communication according to the central management protocol and a second protocol stack (17a-17b) for controlling communication according to the distributed control protocol, whereby the first and second protocol stacks diverge on levels higher than the data link layer (17b, 18b.

Preferably the data-link layer interface comprises point-to-point and link-access-pxocedure-D-channel protocol.

Preferably the method includes the step of providing an interconnection between two of the network elements and supporting both the centrally managed protocol and the distributively managed protocol over that interconnection. In this case preferably the method includes the step of carrying one of the centrally managed control channels of the first network and one of the distributively managed control channels of the second network in the interconnection.

The first network preferably includes a central management terminal, and the step of transmitting control information over the centrally managed control channels is preferably performed by the central management terminal.

Advantageously, the method includes a step in which control information transmitted over the control channels of one of the first and second networks is prevented from extending to a region of the other of the first and second networks. For example, the region may consist of a link connecting the central management terminal to a network element of the first network. The method, for example, may include a step of preventing control information transmitted over the distributively managed control channels of the second network from extending to the central management terminal. Thus the topology of the centrally managed control channels is such that the control channels of the first network extend to the central management terminal, whereas the topology of the distributively managed control channels is such that the control channels of the second network do not extend to the central management terminal.

Other aspects of the method of the invention may relate to the respective topologies of the control channels of the first and second networks being different in a manner similar to the various examples mentioned above with reference to the first aspect of the invention. Preferred examples include blocking the control channels of the first (centrally managed) network at the interface between the first network and a data device (for example network equipment of a user of the network); preventing the control channels of the first (centrally managed) network from passing over links provided for the meshing of network elements; and effectively blocking the control channels of the second (distributively managed) network at the interface with non-routing/non-switching network equipment (for example a signal regenerator). For example, a data device may be connected to the second network, and the method may include a step of preventing control information transmitted over the centrally managed control channels of the first network from extending to the data device.

The method of this aspect of the invention may of course be performed over, or in relation to, a data communications network as described above with reference to the first aspect of the invention.

The method is preferably such that data is transmitted across the first network by means of an OSI protocol, and preferably by means of a suite of OSI protocols including routing protocols.

The method is preferably such that data is transmitted across the second network by means of an IP protocol, and preferably by means of a suite of IP protocols including routing protocols. Preferably, the data is transmitted across the second network by means of MPLS protocols, for example GMPLS.

The method advantageously includes a step in which a network element of the plurality of network elements extracts from signals received at the network element an indication of whether the signals received are to be processed in accordance with a protocol suitable for use with the first network or whether the signals received are to be processed in accordance with a protocol suitable for use with the second network. The method preferably includes a step in which an indication of the type of protocol (for example, indicating whether the protocol is an IP protocol or an OSI protocol) under which data is to be processed is included with the data signals. The indication may, for example, be by means of a protocol identification field or by the use of (data link) addressing information.

The control channels of the first and second networks are preferably embedded data communication channels (DCCs).

The present invention also provides a method of communicating data across a data communications network of the first aspect of the present invention. For example, the method may comprise the step of transmitting data across the network in accordance with a central management protocol or in accordance with a distributed management protocol.

Preferably, the method includes a step of transmitting data in accordance with a central management protocol and a step of transmitting data in accordance with a distributed management protocol.

The present invention further provides according to a third aspect of the invention a network element first and of a second data communications as defined in claim 31 and according to a further aspect a computer software product as defined in claim 32.

The network element may previously have been a legacy network element. The configuration (or conversion) of such a network element may be by means of a suitable hardware upgrade or software upgrade. Thus, the conversion of an existing network element to one of the present invention may include a step of programming the network element with appropriate updated software. The requirements of such computer software will be apparent to the relevant persons skilled in the art and, as such, further details of such software are not provided here. Of course, the conversion could be made by means of extra hardware in addition to, or instead of, providing such software.

The implementation of the method may utilise any suitable means, which facilitates the running of two different protocols in parallel over the control channels of a data communications network. Such means have been proposed in relation to enabling centrally managed SONET/SDH networks to support IP-based protocols for central control. One example that provides a suitable solution to running two protocols in parallel is described in the NSIF document referred to above ("SIF Contribution NSIF-AR-9910-111 Alternatives for IP on SONET DCC") and effectively proposes to use PPP (point-to-point protocol) with HDLC (High-level Data Link Control) framing. This example solution is a form of the addressing technique where a separate data link address is used for each protocol. In relation to the present method, separate control of the state of each layer-2 (the Data Link Layer in the 7 layer OSI model laid down by the ISO) protocol (for example, PPP - point-to-point protocol and LAPD - Link Access Procedure "D- Channel" protocols) is advantageously provided to allow separate control of the topology for each protocol (OSI/IP). For example, this control may be used at Network Element commissioning time to control the topology of each DCN (OSI/IP) and may subsequently be used as the network evolves. It will be understood however that other means could also be used to implement the method.

Embodiments of the present invention will now be described by way of example with reference to the accompanying schematic drawings, of which:
- Fig. 1: shows a data communications network in accordance with an embodiment of the invention,
- Fig. 2: shows a data communications network including the network as shown in Fig. 1,
- Fig. 3: shows a section of the data communications network of Fig. 1,
- Fig. 4: shows a further section of the data communications network of Fig. 1,
- Fig. 5: shows a further aspect of the data communications network of Fig. 1, and
- Fig. 6: shows a dual communications stack model illustrating the operation of the network of Fig. 1.

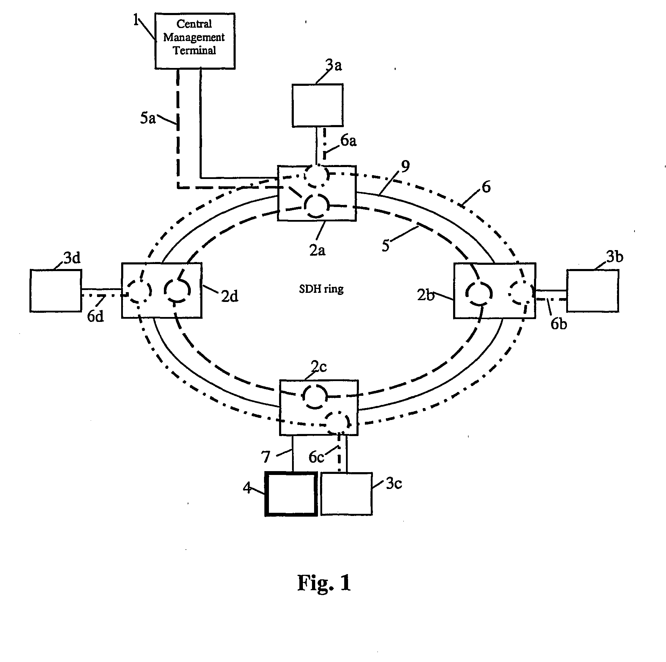

Figure 1 shows a data communications network comprising a plurality of interconnected network devices 2 (only four 2a to 2d are shown in Fig. 1 for the sake of clarity). Each network device 2 is an MPLS-enabled SONET/SDH multiplexer and collectively the network devices 2 form an SDH ring 9.

The SDH ring 9, which may be considered as part of a first network, is centrally managed by means of OSI protocols by a central management terminal 1 connected to the SDH ring via an Ethernet interface. The control of the first network is effected by the central management terminal 1 by means of a network 5 of embedded communication channels (DCCs) which are contained in 'overhead' areas of the data signal. In the illustrated embodiment, where the network devices 2 are SONET/SDH Network Elements (NEs), the DCCs are contained in the overhead area in the relevant part of the data frame. (If the NEs were WDM NEs the DCCs might be transmitted over a 'spare' wavelength). The network of embedded channels 5, 5a of the first network form a first data communications network (DCN), which is accessible at any one of the network devices 2 by means of an Ethernet interface (or other suitable standard data communications technology interface). Any of the network devices 2a, 2b, 2c, 2d could therefore be considered as a gateway network element.

Connected to each of the network devices 2 are MPLS enabled data devices 3a to 3d (for example network routers or network switches). The network devices 2 and the data devices 3 may be distributively managed by means of IP and MPLS (in particular GMPLS) protocols. The network devices 2 and the data devices 3 may be considered as forming part of a second network. Use of a distributed control protocol such as GMPLS allows connection requests for new circuits to be disseminated into the network and for the network itself to set-up the requested circuit(s). The distributed management of the second network is effected by means of a network of embedded communication channels 6, 6a to 6d (DCCs) which are again contained in 'overhead' areas of the data signal. The network of embedded channels (DCCs) 6, 6a, 6b, 6c, 6d of the second network form a second data communications network (DCN).

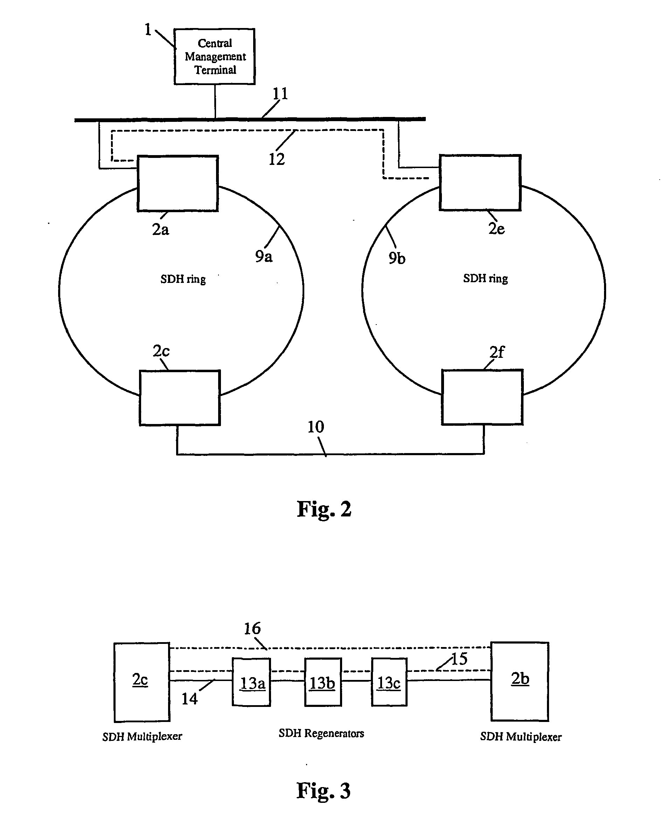

The topology of the DCCs 5 of the first DCN is different from the topology of the DCCs 6 of the second DCN. There are several parts of the network illustrated in Fig. 1 where the respective topologies of the DCNs 5, 6 are different for various reasons as is explained in further detail below with reference to Figures 2 to 5.

The SDH ring 9 is also connected to unmanaged data devices 4 (only one of which is shown in Fig. 1 for the sake of clarity) in the form of switches or routers. The unmanaged data devices 4 may facilitate the connection of external client equipment to the SDH network, the connection being set up by means of OSI protocols. In Fig. 1, the connection 7 from the network device 2c of the SDH ring 9 to the unmanaged data device 4 is not a part of either DCN network 5, 6.

The network as shown in Fig. 1 is able to handle both OSI protocols by means of the first DCN 5 and GMPLS protocols by means of the second DCN 6. The distributed control DCN 6 strictly follows the topology of the data traffic (i.e. the control information passes over the same circuits as the data that it is managing), thereby facilitating correct control of the traffic. Such an arrangement allows, for example, efficient detection of network faults, in that a fault in the circuit (for example, a break in the circuit) affecting the data will also affect the distributed management signals, thereby facilitating quick detection of the fault.

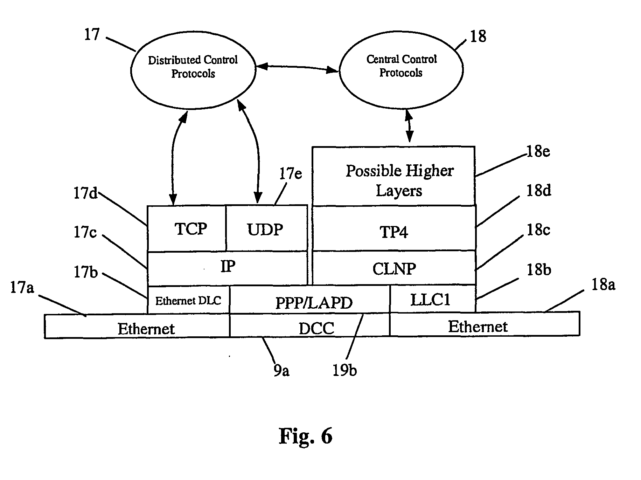

The two DCNs, where they coincide, are effectively able to be transmitted over the same physical media. Fig. 6 illustrated how this is achieved. A combined dual-stack arrangement comprising two communication stacks 17, 18 is provided. One stack 18 is provided for the central management communications (OSI protocols) and the other stack 17 is provided for the distributed management communications (TCP/IP protocols).

The handling of the two different protocols on the DCC interfaces is implemented by utilising the proposals suggested in the document "NSIF-AR-9910-111 - Alternatives for IP on SONET DCC" (mentioned above). In particular, the embodiment utilises the method proposed in the NSIF document entitled "PPP with HDLC framing". To summarise, the frame structure used includes, in order: (1) a flag sequence (binary sequence 01111110); (2) an address field, which according to the basic frame as defined in RFC 1662 should contain the binary sequence 11111111 (the "all stations address"), but in this embodiment of the present invention is used to identify the type of protocol (i.e. whether IP or OSI); (3) a control field (for example, containing the binary sequence 00000011); (4) a protocol field followed by (5) an information field, the protocol field being of one or two octets in length and its value identifying the datagram encapsulated in the information field of the packet, and the information field containing the datagram for the protocol specified in the protocol field and being of up to 1500 octets in length (or more depending on the particular circumstances); (6) a padding field, if padding is required; (7) a frame check sequence (FCS) field (two octets in length by default or possibly of variable length, depending on the particular circumstances), the value in the FCS field being calculated over all bits of the address, control, protocol, information and padding fields, but not the FCS field itself. The end of the frame is defined by a closing flag sequence appearing immediately after the frame check sequence field. (The protocol field may of course also indicate whether the packet is to be treated as an OSI packet or an IP packet). For further details, the reader is directed to the document named "RFC 1661: The point-to-point protocol (PPP)" by W. Simpson of The Network Working Group of the Internet Engineering Task Force (IETF) dated July 1994 and "RFC 1662 : PPP in HDLC-like Framing" by W. Simpson of the Point-to-Point Protocol Working Group also of the Internet Engineering Task Force (IETF) and also dated July 1994.

As will be apparent from above, the method used is a form of the layer-2 (data link layer) addressing technique, where layer-2 addresses (which are redundant on point-to-point links such as the DCCs) are used to distinguish protocol type. Thus, two quasi-parallel DCNs are provided, one based on OSI protocols and the other on IP protocols, the OSI protocols being used for central control and the IP protocols being used for distributed control (via GMPLS protocols).

As shown in Fig. 6, the communication protocol stack 17 for distributed control and the communication protocol stack 18 for central control operate over quasi-parallel DCCs (19a) at the physical layer accessible by means of Ethernet interfaces 17a, 18a. At the data link layer PPP and LAPD protocols 19b co-exist by means of the PPP protocols incorporating HDLC framing. Also, over the data link layer, the distributed control protocols 17 include Ethernet data link control protocols 17b and the central management control protocols 18 include LLC1 protocols 18b. On levels higher than the data link layer the central control and distributed control protocols 17, 18 diverge. In relation to the distributed control protocols 17, IP protocols 17c are used on the network layer, TCP protocols 17d and/or UDP protocols 17e are used on the transport layer and there may also be higher layers (not shown). In relation to the central control protocols 18, CLNP protocols 18c are used on the network layer, TP4 protocols 18d are used on the transport layer and other suitable protocols are used on any further higher layers 18e (for example on a session layer). As is standard in the art, data/signals are manipulated and processed in a way that can be considered as enabling the interaction of protocols that are adjacent to each other in a given stack. As will be appreciated, Fig. 6 is only a schematic illustration aiding the understanding of the interaction of the two types of protocol (centrally and distributively managed).

Separate control of the state of each layer-2 (data link) protocol (PPP/LAPD) is provided, thereby allowing separate control of the topology for each DCN 6, 7 and their associated protocols (OSI/IP).

The network elements 2 determine the type of protocol under which data is transmitted by the layer-2 addressing. There are in effect two logical data links, one for IP which uses PPP protocol and one for OSI which uses LAPD protocol. Each network element 2 is thus able quickly to determine the relevant protocol to be used in relation to data/signals received at the network element.

Figure 1 shows only one SDH ring 9. In reality many SDH rings would be managed by a single central management system, as is illustrated schematically in Figure 2, in which two SDH rings 9a, 9b are illustrated. A network device 2c of the first SDH ring 9a is linked to a network device 2f of the second SDH ring 9b by a connection 10. The central management system 1 that manages the first SDH ring 9a also manages the second SDH ring 9b (see the connection between the central management system 1 and a network device 2e of the second SDH ring 9b). Between the central management system 1 and the SDH rings 9a, 9b there is an Ethernet interface 11. Central control signals are sent over the DCN via a DCC link 12 (see also DCC link 5a in Fig. 1). As mentioned above the topology of the DCN for central management is different from the topology of the DCN for distributed management. In Fig. 2, for example, the Ethernet interface link 12 does not form part of the distributed control DCN; only the central management protocols are used over the link 12. This is effected by actively blocking the distributed control protocols from extending to the Ethernet interface link 12. Blocking distributed control protocols in this way avoids the link 12 as being seen as a valid traffic path by the distributed control protocols. (If that occurred the central control DCN might be loaded to such an extent that its ability to provide a control path for the central management of the network would be adversely affected.) The same principle is illustrated in Fig. 1, wherein the DCCs 5 of the first network extend to the central management terminal 1 (see branch 5a of the DCN), whereas the DCCs 6 of the second network do not.

Figure 3 illustrates a further example in which the topologies of the two DCNs are different. Figure 3 shows in greater detail the connection (illustrated schematically as connection 14) between two SDH network devices 2b, 2c of the SDH ring 9 shown in Figure 1. The network devices are connected via a plurality of SDH signal regenerators 13a, 13b, 13c (three of which are illustrated in Fig. 3). The DCCr (DCC regenerator) channel 15 is terminated at each SDH Regenerator 13, whereas the DCCm (DCC multiplexer) channel 16 is only terminated by the multiplexer 2b, 2c. As the regenerators 13 do not perform any switching function they can be bypassed by the distributed control protocols. Thus only the Central Management protocols are present on the DCCr 15, whereas both Central and Distributed protocols are present on the DCCm 16. Thus, IP information is not processed by the regenerators (and is effectively treated as payload information), whereas the regenerator overhead is retrieved and processed by the regenerator (so as to allow the regenerator to convert accurately the data from optical signals to electronic signals and back to optical signals, for example by processing error correction information contained in the regenerator overhead region).

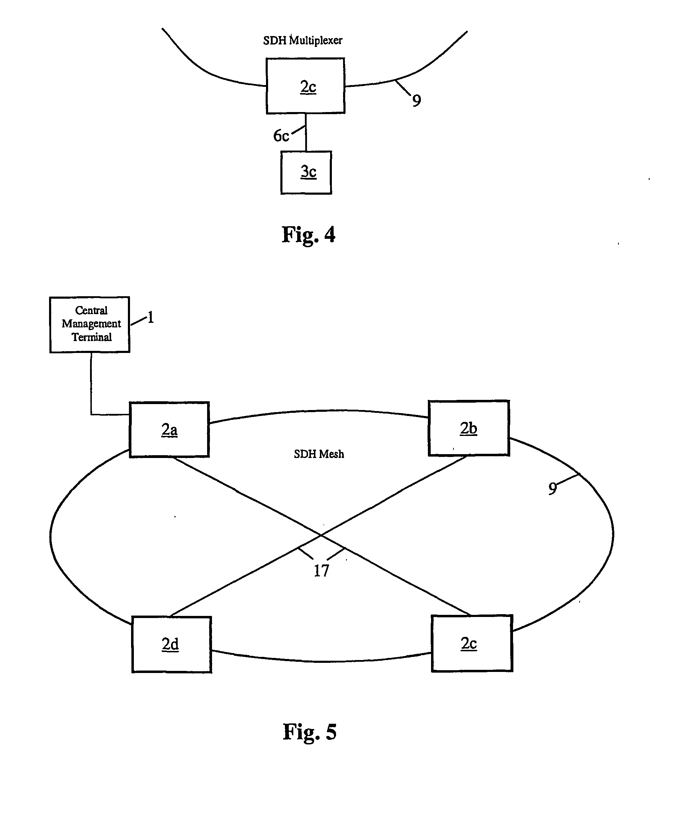

Figure 4 shows a portion of the network of Fig. 1. The interface between the SDH multiplexer 2c of the SDH ring 9 and the MPLS enabled router 3c may be considered as an SDH traffic interface. Equipment owned by a third party (i.e. a customer) may need to participate in the distributed control protocols to allow the third party access to so-called 'dial-up' services. In order not to expose the central control protocols to the customer, which could lead to a risk of misuse of the network via the customer's equipment, the central management DCCs are prevented from extending beyond the interface with the customer's equipment. The distributed management DCCs 6c are however allowed to pass across the interface.

Figure 5 illustrates yet another aspect of the network of Fig. 1, in which it is desirable to have differences between the topologies of the two DCNs. Figure 5 shows the meshing of the SDH ring 9 of Figure 1. The SDH ring 9 is heavily meshed by the addition of many extra connections 17 between network devices 2 (only simple meshing 17 is shown in Fig. 5 for the sake of clarity). The Central Control Protocols are prevented from running over the duplicated links 17 (i.e. the relevant DCCs are blocked), whereas the Distributed Control protocols are allowed to run over the links. If the central management DCC were not blocked from the meshing links 17, the routing information for the protocols used for the Central Management DCN may build up to a state where it adversely loads the DCN. "Pruning" the unnecessary duplicated links, by blocking the central control DCN, reduces the load on the central control DCN.

The embodiment described above has particular application in upgrading legacy optical networks to support GMPLS protocols. The embodiment not only facilitates the deployment of GMPLS protocols in situations where the existing DCN topology would not strictly follow the traffic paths but also allows GMPLS and OSI protocols to be used in parallel over the same network, thereby facilitating the gradual deployment of GMPLS protocols in such legacy SDH/SONET/WDM networks.

As will be appreciated, various modifications may be made to the above described embodiments. For example, the SDH network need not be in the form of a ring.

For the sake of convenience for the reader there now follows a glossary of acronyms used in the above description of the embodiments of the invention illustrated by the attached drawings:
- CLNP: Connectionless Network Protocol
- DCC: Data Communications Channel
- DCN: Data Communications Network
- DLC: Data Link Control
- GMPLS: Generalised Multi-Protocol Label Switching
- HDLC: High-Level Data Link Control
- IP: Internet Protocol
- LAPD: Link Access Procedure "D-Channel"
- LLC1: Logical Link Control 1
- NE: Network Element
- NSIF: Network and Services Integration Forum
- OSI: Open Systems Interconnection
- PPP: Point-to-Point Protocol
- SDH: Synchronous Digital Hierarchy
- SONET: Synchronous Optical Network
- TCP: Transmission Control Protocol
- TP4: Transport Protocol Class 4
- UDP: User Datagram Protocol
- WDM: Wavelength Division Multiplexing

## Claims

1. A data communications network comprising a plurality of interconnected network elements (2) forming at least part of a first data communications network (5) wherein the first data communications network comprises a central management terminal (1), for central management of the first network and centrally managed control channels (5,5A) for communication across the first network of control information relating to the control of the first network, wherein the centrally managed control channels of the first data communications network extend to the central management terminal (1), wherein the plurality of interconnected network elements form at least a part of a second data communications network (6), wherein the second data communications network comprises a distributive management system and distributively managed control channels (6, 6a-6d) for communication across the second data communications network of control information relating to the control of the second network wherein the distributively managed control channels of the second network do not extend to the central management terminal (1) and wherein the data communications network is able to handle both
(i) a central management protocol by means of the first network and its control channels and
(ii) a distributed control protocol by means of the second network and its control channels,
**Characterised in that**
the network elements comprise a first protocol stack (18a-18e) for controlling communication according to the central management protocol and a second protocol stack (17a-17e) for controlling communication according to the distributed control protocol, whereby the first and second protocol stacks diverge on levels higher than the data link layer (17b, 18b).

2. A data communications network as claimed in claim 1 in which the data-link layer comprises point-to-point and link-access-procedure-D-channel protocol.

3. A data communications network as claimed in claim 1 or claim 2 comprising an interconnection between two of the network elements in which the interconnection is operable to support both the centrally managed protocol and the distributively managed protocol.

4. A data communications network according to any preceding claim in which the interconnection is operable to carry one of the centrally managed control channels of the first network and one of the distributively managed control channels of the second network.

5. A data communications network according to any preceding claim, wherein the network includes a connection leading from one of the network elements of the second network, the connection being suitable for connecting a data device to the second network.

6. A data communications network according to claim 5, wherein the distributively managed control channels of the second network extend to said connection to said one of the network elements of the second network, whereas the centrally managed control channels of the first network do not extend to said connection.

7. A data communications network according to claim 5 or claim 6, wherein the network further includes a data device connected via said connection to said one of the network elements of the second network.

8. A data communications network according to any one of claims 5 to 7, wherein the data device is a network switch.

9. A data communications network according to any one of claims 5 to 7, wherein the data device is a network router.

10. A data communications network according to any preceding claim, wherein the network elements of che first network are able to handle an OSI protocol.

11. A data communications network according to any preceding claim, wherein the network elements of the second network are able to handle an IP protocol.

12. A data communications network according to any preceding claim, wherein the network elements of the second network are able to handle protocols associated with MPLS.

13. A data communications network according to any preceding claim, wherein each of the plurality of network elements are configured to be able to extract from signals received at the network element an indication of whether the signals received are to be processed in accordance with a protocol suitable for use with the first network or whether the signals received are to be processed in accordance with a protocol suitable for use with the second network.

14. A data communications network according to the combination of claims 10, 11 and 13, wherein the network is so arranged that data transmitted by means of a given protocol contains an indication that the data is being transmitted under that protocol.

15. A data communications network according to claim 14, wherein said indication is contained within a protocol identification field.

16. A data communications network according to claim 14, wherein said indication may be determined from data link addressing information.

17. A data communications network according to any preceding claim, wherein the control channels of the first and second networks are embedded control channels.

18. A data communications network according to any preceding claim, wherein the first network comprises a non-routing network element, the centrally managed control channels of the first network extend to the non-routing network element, and the distributively managed control channels of the second network are not accessible by the non-routing network element.

19. A data communications network according to any preceding claim, wherein the network includes a link between network elements common to the first and second networks, the link being so arranged that the distributively managed control channels of the second network extend to said link, whereas the centrally managed control channels of the first network do not extend to said link.

20. A method of communicating across a data communications network, the network comprising a plurality of interconnected network elements (2a-2d) forming at least part of a first data communications network (5,5a), and the plurality of interconnected network elements forming at least a part of a second data communications network (6,6a-6d), the method including the steps of:
(a) centrally managing the first network by means of transmitting control information over centrally managed control channels of the first network, wherein the first network includes a central management terminal, and the step of transmitting control information over the centrally managed control channels is performed by the central management terminal,
(b) distributively managing the second network by means of transmitting control information over distributively managed control channels of the second network, in which the topology of the centrally managed control channels of the first network is different from the topology of the distributively managed control channels of the second network, and,
(c) transmitting data across the first network by means of a central management protocol(18)
(d) and transmitting data across the second network by means of a distributed control protocol (17),
**Characterised in that**:-
the network elements comprise a first protocol stack (18a-18b) for controlling communication according to the central management protocol and a second protocol stack (17a-17b) for controlling communication according to the distributed control protocol, whereby the first and second protocol stacks diverge on levels higher than the data link layer (17b, 18b.

21. A method as claimed in claim 20 in which the communication via the data-link layer uses point-to-point and link-access-procedure-D-channel protocol.

22. A method as claimed in claim 20 or claim 21 including steps of providing an interconnection between two of the network elements and supporting both the centrally managed protocol and the distributively managed protocol over that interconnection.

23. A method as claimed in claim 22 including a step of carrying one of the centrally managed control channels of the first network and one of the distributively managed control channels of the second network in the interconnection.

24. A method of communicating across a data communications network according to any of claims 20 to 23, wherein the method includes a step of preventing control information transmitted over the distributively managed control channels of the second network from extending to the central management terminal.

25. A method of communicating across a data communications network according to any of claims 20 to 24, wherein a data device is connected to the second network, and the method includes a step of preventing control information transmitted over the centrally managed control channels of the first network from extending to the data device.

26. A method of communicating across a data communications network according to any of claims 20 to 25, wherein data is transmitted across the first network by means of an OSI protocol.

27. A method of communicating across a data communications network according to any of claims 20 to 26, wherein data is transmitted across the second network by means of an IP protocol.

28. A method of communicating across a data communications network according to any of claims 20 to 26, wherein data is transmitted across the second network by means of MPLS protocols.

29. A method of communicating across a data communications network according to any of claims 20 to 28, wherein the method includes a step in which a network element of the plurality of network elements extracts from signals received at the network element an indication of whether the signals received are to be processed in accordance with a protocol suitable for use with the first network or whether the signals received are to be processed in accordance with a protocol suitable for use with the second network.

30. A method of communicating across a data communications network according to the combination of claims 26, 27 and 29, wherein the method includes a step in which an indication of the type of protocol under which data is to be processed is included with the data signals.

31. A network element (2a-2d) to form part of a first and of a second data communications network (5, 5a, 6, 6a-6d), in which the network element comprises connection means for connection to other network elements of the first network and other network elements of the second network; in which the first data communications network comprises control channels for communication across the first network of control information relating to the control of the first network, in accordance with a central management protocol, in which the second data communications network comprises control channels for communication across the second data communications network of control information relating to the control of the second network in accordance with a distributed control protocol,
**characterised in that**
the network element also comprises a first protocol stack (18a-18e) for controlling communication according to the central management protocol and a second protocol stack (17a-17e) for controlling communication according to the distributed control protocol, whereby the first and second protocol stacks diverge on levels higher than the data link layer (17b, 18b.

32. A computer software product comprising program instructions that, when executed on a computer, perform all steps of the method according to claim 20.

## Patentansprüche

1. Datenkommunikationsnetz, das eine Mehrzahl von untereinander verbundenen Netzelementen (2) umfasst, die zumindest einen Teil eines ersten Datenkommunikationsnetzes (5) bilden, wobei das erste Datenkommunikationsnetz ein Zentralverwaltungsendgerät (1) umfasst, zur zentralen Verwaltung des ersten Netzes, sowie zentral verwaltete Steuerkanäle (5, 5A) zur Übermittlung von Steuerinformationen in dem ersten Netz, welche sich auf die Steuerung des ersten Netzes beziehen, wobei die zentral verwalteten Steuerkanäle des ersten Datenkommunikationsnetzes bis zu dem Zentralverwaltungsendgerät (1) laufen, wobei die mehreren untereinander verbundenen Netzelemente zumindest einen Teil eines zweiten Datenkommunikationsnetzes (6) bilden, wobei das zweite Datenkommunikationsnetz ein verteiltes Verwaltungssystem und verteilt verwaltete Steuerkanäle (6, 6a - 6d) umfasst, zur Übermittlung von Steuerinformationen in dem zweiten Kommunikationsnetz, die sich auf die Steuerung des zweiten Netzes beziehen, wobei die verteilt verwalteten Steuerkanäle des zweiten Netzes nicht zu dem Zentralverwaltungsendgerät (1) laufen und wobei das Datenkommunikationsnetz in der Lage ist, sowohl (i) ein zentrales Verwaltungsprotokoll mit Hilfe des ersten Netzes und der Steuerkanäle desselben als auch (ii) ein verteiltes Steuerprotokoll mit Hilfe des zweiten Netzes und der Steuerkanäle desselben abzuwickeln,
**dadurch gekennzeichnet, dass**
die Netzelemente einen ersten Protokollstapel (18a - 18e), zur Steuerung der Kommunikation entsprechend dem zentralen Verwaltungsprotokoll umfassen, sowie einen zweiten Protokollstapel (17a - 17e) zur Steuerung der Kommunikation entsprechend dem verteilten Steuerprotokoll, wobei der erste und der zweite Protokollstapel auf höheren Ebenen als der Datenverbindungsschicht (17b, 18b) divergieren.

2. Datenkommunikationsnetz nach Anspruch 1, bei welchem die patenverbindungsschicht ein Punkt-zu-Punkt- und ein LAP (Link Access Procedure)-D-Kanal-Protokoll umfasst.

3. Datenkommunikationsnetz nach Anspruch 1 oder Anspruch 2, welches eine Verbindung zwischen zwei der Netzelemente umfasst, wobei die Verbindung dazu dienen kann, sowohl das zentrale Verwaltungsprotokoll als auch das verteilte Verwaltungsprotokoll zu unterstützen.

4. Datenkommunikationsnetz nach einem der vorhergehenden Ansprüche, bei welchem die Verbindung dazu dienen kann, einen der zentral verwalteten Steuerkanäle des ersten Netzes und einen der verteilt verwalteten Steuerkanäle des zweiten Netzes zu führen.

5. Datenkommgnikationenetz nach einem der vorhergehenden Ansprüche, wobei das Netz einen Anschluss umfasst, der von einem der Netzelemente des zweiten Netzes wegführt, wobei der Anschluss dazu geeignet ist, eine Dateneinrichtung an das zweite Netz anzuschließen.

6. Datenkommunikationsnetz nach Anspruch 5, bei welchem die verteilt verwalteten Steuerkanäle des zweiten Netzes bis zu dem Anschluss zu dem einen der Netzelemente des zweiten Netzes laufen, wogegen die zentral verwalteten Steuerkanäle des ersten Netzes nicht bis zu diesem Anschluss laufen.

7. Datenkommunikationsnetz nach Anspruch 5 oder Anspruch 6, wobei das Netz ferner eine Dateneinrichtung umfasst, die über den Anschluss mit dem einen der Netzelemente des zweiten Netzes verbunden ist.

8. Datenkommunikationsnetz nach einem der Ansprüche 5 bis 7, bei welchem die Dateneinrichtung eine Netzwerk-Vermittlungseinrichtung ist.

9. Datenkommunikationsnetz nach einem der Ansprüche 5 bis 7, bei welchem die Dateneinrichtung ein Netzwerk-Router ist.

10. Datenkommunikationsnetz nach einem der vorhergehenden Ansprüche, bei welchem die Netzelemente des ersten Netzes in der Lage sind, ein ÖSI-Protokoll abzuwickeln.

11. Datenkommunikationsnetz nach einem der vorhergehenden Ansprüche, bei welchem die Netzelemente des zweiten Netzes in der Lage sind, ein IP-Protokoll abzuwickeln.

12. Datenkommunikationsnetz nach einem der vorhergehenden Ansprüche, bei welchem die Netzelemente des zweiten Netzes in der Lage sind, Protokolle abzuwickeln, die mit MPLS verknüpft sind.

13. Datenkommunikationsnetz nach einem der vorhergehenden Ansprüche, bei welchem jedes der mehreren Netzelemente derart konfiguriert ist, dass es in der Lage ist, aus Signalen, die an dem Netzelement empfangen werden, eine Angabe dazu zu extrahieren, ob die empfangenen Signale entsprechend einem Protokoll verarbeitet werden sollen, das zur Verwendung mit dem ersten Netz geeignet ist, oder ob die empfangenen Signale entsprechend einem Protokoll verarbeitet werden sollen, das zur Verwendung mit dem zweiten Netz geeignet ist.

14. Datenkommunikationsnetz entsprechend der Kombination der Ansprüche 10, 11 und 13, wobei das Netz derart vorgesehen ist, dass Daten, die mit Hilfe eines gegebenen Protokolls übertragen werden, eine Angabe dazu enthalten, dass die paten unter diesem Protokoll übertragen werden.

15. Datenkommunikationsnetz nach Anspruch 14, bei welchem diese Angabe in einem Protokollidentifizierungsfeld enthalten ist.

16. Datenkommunikationsnetz nach Anspruch 14, bei welchem diese Angabe aus Datenübertragungs-Adressierungsinformationen bestimmt werden kann.

17. Datenkommunikationsnetz nach einem der vorhergehenden Ansprüche, bei welchem die Steuerkanäle des ersten und des zweiten Netzes eingebettete Steuerkanäle sind.

18. Datenkommunikationsnetz nach einem der vorhergehenden Ansprüche, bei welchem das erste Netz ein nichtwegelenkendes Netzelement umfasst, wobei die zentral verwalteten Steuerkanäle des ersten Netzes sich zu dem nicht-wegelenkenden Netzelement hin erstrecken und wobei die verteilt verwalteten Steuerkanäle des zweiten Netzes für das nicht-wegelenkende Netzelement nicht zugänglich sind.

19. Datenkommunikationsnetz nach einem der vorhergehenden Ansprüche, wobei das Netz eine Verbindungsleitung zwischen Netzelementen umfasst, die für das erste und das zweite Netz gemeinsam vorgesehen ist, wobei die Verbindungsleitung derart angeordnet ist, dass die verteilt verwalteten Steuerkanäle des zweiten Netzes bis zu dieser Verbindungsleitung laufen, wogegen die zentral verwalteten Steuerkanäle des ersten Netzes nicht bis zu dieser Verbindungsleitung laufen.

20. Verfahren zur Kommunikation in einem Datenkommunikationsnetz, wobei das Netz eine Mehrzahl von untereinander verbundenen Netzelementen (2a - 2b) umfasst, die zumindest einen Teil eines ersten Datenkommunikationsnetzes (5, 5a) bilden, und wobei die mehreren untereinander verbundenen Netzelemente zumindest einen Teil eines zweiten Datenkommunikationsnetzes (6, 6a - 6d) bilden, wobei das Verfahren die folgenden Schritte umfasst:
(a) zentrales Verwalten des ersten Netzes durch übertragen von Steuerinformationen über zentral verwaltete Steuerkanäle des ersten Netzes, wobei das erste Netz ein Zentralverwaltungsendgerät umfasst und der Schritt des Übertragens von Steuerinformationen über die zentral verwalteten Steuerkanäle von dem Zentralverwaltungsendgerät ausgeführt wird,
(b) verteiltes Verwalten des zweiten Netzes durch übertragen von Steuerinformationen über verteilt verwaltete Steuerkanäle des zweiten Netzes, wobei sich die Topologie der zentral verwalteten Steuerkanäle des ersten Netzes von der Topologie der verteilt verwalteten Steuerkanäle des zweiten Netzes unterscheidet, und
(c) Übertragen von Daten in dem ersten Netz mit Hilfe eines zentralen Verwaltungsprotokolls (18),
(d) und Übertragen von Daten in dem zweiten Netz mit Hilfe eines verteilten Steuerprotokolls (17),
**dadurch gekennzeichnet, dass**
die Netzelemente einen ersten Protokollstapel (18a - 18b) zur Steuerung der Kommunikation entsprechend dem zentralen Verwaltungsprotokoll umfassen, sowie einen zweiten Protokollstapel (17a - 17b) zur Steuerung der Kommunikation entsprechend dem verteilten Steuerprotokoll, wobei der erste und der zweite Protokollstapel auf höheren Ebenen als der Datenverbindungsschicht (17b, 18b) divergieren.

21. Verfahren nach Anspruch 20, bei welchem die Kommunikation über die Datenverbindungssehicht ein Punkt-zu-Punkt- und ein LAP(Link Access Procedure)-D-Kanal-Protokoll nutzt.

22. Verfahren nach Anspruch 20 oder Anspruch 21, welches die schritte beinhaltet, eine Verbindung zwischen zwei der Netzelemente bereitzustellen und sowohl das zentral verwaltete Protokoll als auch das verteilt verwaltete Protokoll über diese Verbindung zu unterstützen.

23. Verfahren nach Anspruch 22, welches einen Schritt des Führens eines der zentral verwalteten Steuerkanäle des ersten Netzes und eines der verteilt verwalteten Steuerkanäle des zweiten Netzes in der Verbindung umfasst.

24. Verfahren zur Kommunikation in einem Datenkommunikationsnetz nach einem der Ansprüche 20 bis 23, wobei das Verfahren einen Schritt umfasst, zu verhindern, dass Steuerinformationen, die über die verteilt verwalteten Steuerkanäle des zweiten Netzes übertragen werden, zu dem Zentralverwaltungsendgerät weitergeleitet werden.

25. Verfahren zur Kommunikation in einem Datenkommunikationsnetz nach einem der Ansprüche 20 bis 24, bei welchem eine Dateneinrichtung mit dem zweiten Netz verbunden ist und das Verfahren einen Schritt umfasst, zu verhindern, dass Steuerinformationen, die über die zentral verwalteten Steuerkanäle des ersten Netzes übertragen werden, zu der Dateneinrichtung weitergeleitet werden,

26. Verfahren zur Kommunikation in einem Datenkommunikationsnetz nach einem der Ansprüche 20 bis 25, bei welchem Daten indem ersten Netz mit Hilfe eines OSI-Protokolls übertragen werden.

27. Verfahren zur Kommunikation in einem Datenkommunikationsnetz nach einem der Ansprüche 20 bis 26, bei welchem Daten in dem zweiten Netz mit Hilfe eines IP-Protokolls übertragen werden.

28. Verfahren zur Kommunikation in einem Datenkommunikationsnetz nach einem der Ansprüche 20 bis 26, bei welchem Daten in dem zweiten Netz mit Hilfe von MPLS-Protokollen übertragen werden.

29. Verfahren zur Kommunikation in einem Datenkommunikationsnetz nach einem der Ansprüche 20 bis 28, wobei das Verfahren einen Schritt umfasst, bei welchem ein Netzelement der mehreren Netzelemente aus Signalen, die an dem Netzelement empfangen werden, eine Angabe dazu extrahiert, ob die empfangenen Signale entsprechend einem Protokoll verarbeitet werden sollen, das zur Verwendung mit dem ersten Netz geeignet ist, oder ob die empfangenen Signale entsprechend einem Protokoll verarbeitet werden sollen, das zur Verwendung mit dem zweiten Netz geeignet ist.

30. Verfahren zur Kommunikation in einem Datenkommunikationsnetz entsprechend der Kombination der Ansprüche 26, 27 und 29, wobei das Verfahren einen Schritt umfasst, in welchem eine Angabe zu der Art des Protokolls, unter welchem Daten verarbeitet werden sollen, in den Datensignalen enthalten ist.

31. Netzelement (2a - 2d), um einen Teil eines ersten und eines zweiten Datenkommunikationsnetzes (5, 5a, 6, 6a - 6d) zu bilden, wobei das Netzelement Verbindungsmittel zur Verbindung mit anderen Netzelementen des ersten Netzes und anderen Netzelementen des zweiten Netzes umfasst, wobei das erste Datenkommunikationsnetz Steuerkanäle zur Übermittlung von Steuerinformationen in dem ersten Netz, die sich auf die Steuerung des ersten Netzes beziehen, entsprechend einem zentralen. Verwaltungsprotokoll umfasst, wobei das zweite Datenkommunikationsnetz Steuerkanäle zur Übermittlung von Steuerinformationen in dem zweiten Datenkammunikationsnetz, die sich auf die Steuerung des zweiten Netzes beziehen, entsprechend einem verteilten Steuerprotokoll umfasst,
**dadurch gekennzeichnet, dass**
die Netzelemente außerdem einen ersten Protokollstapel (18a - 18e) zur Steuerung der Kommunikation entsprechend dem zentralen Verwaltungsprotokoll umfassen, sowie einen zweiten Protokollstapel (17a - 17e) zur Steuerung der Kommunikation entsprechend dem verteilten Steuerprotokoll, wobei der erste und der zweite Protokollstapel auf höheren Ebenen als der Datenverbindungsschicht (17b, 18b) divergieren.

32. Computersoftwareprodukt, welches Programmbefehle umfasst, die, wenn sie auf einem Computer ausgeführt werden, alle Schritte des Verfahrens entsprechend Anspruch 20 ausführen.

## Revendications

1. Réseau de communications de données comprenant une pluralité d'éléments de réseau interconnectés (2) faisant au moins partie d'un premier réseau de communications de données (5) dans lequel le premier réseau de communications de données comprend un terminal de gestion centrale (1), pour la gestion centrale du premier réseau et des canaux de contrôle gérés de manière centrale (5, 5A) pour la communication à travers le premier réseau d'informations de contrôle relatives au contrôle du premier réseau, dans lequel les canaux de contrôle gérés de manière centrale du premier réseau de communications de données s'étendent jusqu'au terminal de gestion centrale (1), dans lequel la pluralité d'éléments de réseau interconnectés font au moins partie d'un second réseau de communications de données (6), dans lequel le second réseau de communications de données comprend un système de gestion distributive et des canaux de contrôle gérés de manière distributive (6, 6a-6d) pour la communication à travers le second réseau de communications de données d'informations de contrôle relatives au contrôle du second réseau, dans lequel les canaux de contrôle gérés de manière distributive du second réseau ne s'étendent pas jusqu'au terminal de gestion centrale (1) et dans lequel le réseau de communications de données est capable de prendre en charge à la fois
(i) un protocole de gestion centrale par le biais du premier réseau et de ses canaux de contrôle et
(ii) un protocole de contrôle distribué par le biais du second réseau et de ses canaux de contrôle,
**caractérisé en ce que**
les éléments de réseau comprennent une première pile de protocoles (18a-18e) pour contrôler la communication selon le protocole de gestion centrale et une seconde pile de protocoles (17a-17e) pour contrôler la communication selon le protocole de contrôle distribué, moyennant quoi les première et seconde piles de protocoles divergent sur des niveaux supérieurs à la couche liaison de données (17b, 18b).

2. Réseau de communications de données selon la revendication 1, dans lequel la couche liaison de données comprend un protocole point à point et de procédure d'accès à la liaison sur le canal D.

3. Réseau de communications de données selon la revendication 1 ou la revendication 2 comprenant une interconnexion entre deux des éléments de réseau, dans lequel l'interconnexion est exploitable pour supporter à la fois le protocole géré de manière centrale et le protocole géré de manière distributive.

4. Réseau de communications de données selon l'une quelconque des revendications précédentes, dans lequel l'interconnexion est exploitable pour acheminer un des canaux de contrôle gérés de manière centrale du premier réseau et un des canaux de contrôle gérés de manière distributive du second réseau.

5. Réseau de communications de données selon l'une quelconque des revendications précédentes, dans lequel le réseau comprend une connexion conduisant depuis un des éléments de réseau du second réseau, la connexion étant appropriée pour connecter un dispositif de données au second réseau.

6. Réseau de communications de données selon la revendication 5, dans lequel les canaux de contrôle gérés de manière distributive du second réseau s'étendent jusqu'à ladite connexion audit un des éléments de réseau du second réseau, alors que les canaux de contrôle gérés de manière centrale du premier réseau ne s'étendent pas jusqu'à ladite connexion.

7. Réseau de communications de données selon la revendication 5 ou la revendication 6, dans lequel le réseau comprend en outre un dispositif de données connecté via ladite connexion audit un des éléments de réseau du second réseau.

8. Réseau de communications de données selon l'une quelconque des revendications 5 à 7, dans lequel le dispositif de données est un commutateur de réseau.

9. Réseau de communications de données selon l'une quelconque des revendications 5 à 7, dans lequel le dispositif de données est un routeur de réseau.

10. Réseau de communications de données selon l'une quelconque des revendications précédentes, dans lequel les éléments de réseau du premier réseau sont capables de prendre en charge un protocole OSI.

11. Réseau de communications de données selon l'une quelconque des revendications précédentes, dans lequel les éléments de réseau du second réseau sont capables de prendre en charge un protocole IP.

12. Réseau de communications de données selon l'une quelconque des revendications précédentes, dans lequel les éléments de réseau du second réseau sont capables de prendre en charge des protocoles associés à MPLS.

13. Réseau de communications de données selon l'une quelconque des revendications précédentes, dans lequel chacun de la pluralité d'éléments de réseau est configuré pour être capable d'extraire des signaux reçus au niveau de l'élément de réseau une indication de si les signaux reçus doivent être traités conformément à un protocole approprié pour l'utilisation avec le premier réseau ou si les signaux reçus doivent être traités conformément à un protocole approprié pour l'utilisation avec le second réseau.

14. Réseau de communications de données selon la combinaison des revendications 10, 11 et 13, dans lequel le réseau est agencé de sorte que les données transmises par le biais d'un protocole donné contiennent une indication selon laquelle les données sont transmises suivant ce protocole.

15. Réseau de communications de données selon la revendication 14, dans lequel ladite indication est contenue à l'intérieur d'un champ d'identification de protocole.

16. Réseau de communications de données selon la revendication 14, dans lequel ladite indication peut être déterminée à partir d'informations d'adressage de liaison de données.

17. Réseau de communications de données selon l'une quelconque des revendications précédentes, dans lequel les canaux de contrôle des premier et second réseaux sont des canaux de contrôle intégrés.

18. Réseau de communications de données selon l'une quelconque des revendications précédentes, dans lequel le premier réseau comprend un élément de réseau non routeur, les canaux de contrôle gérés de manière centrale du premier réseau s'étendent jusqu'à l'élément de réseau non routeur, et les canaux de contrôle gérés de manière distributive du second réseau ne sont pas accessibles par l'élément de réseau non routeur.

19. Réseau de communications de données selon l'une quelconque des revendications précédentes, dans lequel le réseau comprend une liaison entre des éléments de réseau communs aux premier et second réseaux, la liaison étant agencée de sorte que les canaux de contrôle gérés de manière distributive du second réseau s'étendent jusqu'à ladite liaison, alors que les canaux de contrôle gérés de manière centrale du premier réseau ne s'étendent pas jusqu'à ladite liaison.

20. Procédé de communication à travers un réseau de communications de données, le réseau comprenant une pluralité d'éléments de réseau interconnectés (2a-2d) faisant au moins partie d'un premier réseau de communications de données (5, 5a), et la pluralité d'éléments de réseau interconnectés faisant au moins partie d'un second réseau de communications de données (6, 6a-6d), le procédé comprenant les étapes consistant à :
(a) gérer de manière centrale le premier réseau par le biais de la transmission d'informations de contrôle sur dés canaux de contrôle gérés de manière centrale du premier réseau, dans lequel le premier réseau comprend un terminal de gestion centrale, et l'étape consistant à transmettre des informations de contrôle sur les canaux de contrôle gérés de manière centrale est exécutée par le terminal de gestion centrale,
(b) gérer de manière distributive le second réseau par le biais de la transmission d'informations de contrôle sur des canaux de contrôle gérés de manière distributive du second réseau, dans lequel la topologie des canaux de contrôle gérés de manière centrale du premier réseau est différente de la topologie des canaux de contrôle gérés de manière distributive du second réseau, et,
(c) transmettre des données à travers le premier réseau par le biais d'un protocole de gestion centrale (18)
(d) et transmettre des données à travers le second réseau par le biais d'un protocole de contrôle distribué (17) ;
**caractérisé en ce que** :
les éléments de réseau comprennent une première pile de protocoles (18a-18b) pour contrôler la communication selon le protocole de gestion centrale et une seconde pile de protocoles (17a-17b) pour contrôler la communication selon le protocole de contrôle distribué, moyennant quoi les première et seconde piles de protocoles divergent sur des niveaux supérieurs à la couche liaison de données (17b, 18b).

21. Procédé selon la revendication 20, dans lequel la communication via la couche liaison de données utilise un protocole point à point et de procédure d'accès à la liaison sur le canal D.

22. Procédé selon la revendication 20 ou la revendication 21, comprenant des étapes consistant à fournir une interconnexion entre deux des éléments de réseau et supporter à la fois le protocole géré de manière centrale et le protocole géré de manière distributive sur cette interconnexion.

23. Procédé selon la revendication 22, comprenant une étape consistant à acheminer un des canaux de contrôle gérés de manière centrale du premier réseau et un des canaux de contrôle gérés de manière distributive du second réseau dans l'interconnexion.

24. Procédé de communication à travers un réseau de communications de données selon l'une quelconque des revendications 20 à 23, dans lequel le procédé comprend une étape consistant à empêcher des informations de contrôle transmises sur les canaux de contrôle gérés de manière distributive du second réseau de s'étendre jusqu'au terminal de gestion centrale.

25. Procédé de communication à travers un réseau de communications de données selon l'une quelconque des revendications 20 à 24, dans lequel un dispositif de données est connecté au second réseau, et le procédé comprend une étape consistant à empêcher des informations de contrôle transmises sur les canaux de contrôle gérés de manière centrale du premier réseau de s'étendre jusqu'au dispositif de données.

26. Procédé de communication à travers un réseau de communications de données selon l'une quelconque des revendications 20 à 25, dans lequel les données sont transmises à travers le premier réseau par le biais d'un protocole OSI.

27. Procédé de communication à travers un réseau de communications de données selon l'une quelconque des revendications 20 à 26, dans lequel les données sont transmises à travers le second réseau par le biais d'un protocole IP.

28. Procédé de communication à travers un réseau de communications de données selon l'une quelconque des revendications 20 à 26, dans lequel les données sont transmises à travers le second réseau par le biais de protocoles MPLS.

29. Procédé de communication à travers un réseau de communications de données selon l'une quelconque des revendications 20 à 28, dans lequel le procédé comprend une étape dans laquelle un élément de réseau de la pluralité d'éléments de réseau extrait des signaux reçus au niveau de l'élément de réseau une indication de si les signaux reçus doivent être traités conformément à un protocole approprié pour l'utilisation avec le premier réseau ou si les signaux reçus doivent être traités conformément à un protocole approprié pour l'utilisation avec le second réseau.

30. Procédé de communication à travers un réseau de communications de données selon la combinaison des revendications 26, 27 et 29, dans lequel le procédé comprend une étape dans laquelle une indication du type de protocole suivant lequel les données doivent être traitées est comprise avec les signaux de données.

31. Elément de réseau (2a-2d) destiné à faire partie d'un premier et d'un second réseau de communications de données (5, 5a, 6, 6a-6d), dans lequel l'élément de réseau comprend des moyens de connexion pour la connexion à d'autres éléments de réseau du premier réseau et à d'autres éléments de réseau du second réseau ; dans lequel le premier réseau de communications de données comprend des canaux de contrôle pour la communication à travers le premier réseau d'informations de contrôle relatives au contrôle du premier réseau, conformément à un protocole de gestion centrale, dans lequel le second réseau de communications de données comprend des canaux de contrôle pour la communication à travers le second réseau de communication de données d'informations de contrôle relatives au contrôle du second réseau, conformément à un protocole de contrôle distribué,
**caractérisé en ce que**
l'élément de réseau comprend également une première pile de protocoles (18a-18e) pour contrôler la communication selon le protocole de gestion centrale et une seconde pile de protocoles (17a-17e) pour contrôler la communication selon le protocole de contrôle distribué, moyennant quoi les première et seconde piles de protocoles divergent sur des niveaux supérieurs à la couche liaison de données (17b, 18b).

32. Produit logiciel informatique comprenant des instructions de programme qui, lorsque exécutées sur un ordinateur, effectuent toutes les étapes du procédé selon la revendication 20.
